# EUROPEAN PATENT SPECIFICATION

(11) **EP 2 850 407 B1**
(45) Date of publication and mention of the grant of the patent: **26.04.2017**
(21) Application number: 13745163.9
(22) Date of filing: 15.05.2013
(51) Int. Cl.: G01M 99/00, B60S 1/38

(54) **PROCESS AND TEST DEVICE FOR THE TESTING OF WINDSCREEN WIPER BLADE END CAPS**
VERFAHREN UND VORRICHTUNG ZUM TESTEN VON SCHEIBENWISCHERBLATTENDKAPPEN
PROCESSUS ET DISPOSITIF DE TEST POUR TESTER DES EMBOUTS DE BALAI D'ESSUIE-GLACE

(30) Priority: 15.05.2012 HU P1200284
(43) Date of publication of application: 25.03.2015
(73) Proprietor: Federal-Mogul S.A., 6790 Aubange (BE)
(72) Inventor: KONTZ, Zoltán, Babits M. U. 73 (HU)
(74) Representative: Hooiveld, Arjen Jan Winfried
(86) International application number: PCT/HU2013/000046
(87) International publication number: WO 2013/171524

(56) References cited:
- DE-A1-102008 041 261
- FR-A1- 2 919 722
- US-B2- 7 210 190

## Description

This invention pertains to a process and test device used in the testing of windscreen wiper blade end caps. The solution according to this invention can be applied to advantage in establishing, during the installation process, whether caps have been fitted and secured adequately and thus, whether caps have been manufactured according to specifications or, alternately, do not fit properly, possibly causing the wiper blade to fall apart and/or become lost. The solution according to this invention may be used to decrease the number of related automobile accidents, as well as to increase customer satisfaction, given that well-installed and inspected windscreen wiper blades do a better overall job clearing the windscreen of matter that obstructs vision.

There are well-known solutions representing prior art that include a windscreen wiper blade end cap. One example of this is the windscreen wiper blade described in patent documentation number US2012198649, consisting of a rubber profile element with a wiping edge and at least one carriage element that can be connected to the wiper arm using a securing element and a connecting element. The securing element includes a cover cap and a connecting element used to secure it to the wiper arm.

The patent documentation published under number WO2010018032 describes a windscreen wiper blade that includes a spoiler and end cap.

Patent document DE19708578 describes a vehicle windscreen wiper blade in which two claw pairs engage in opposing longitudinal grooves formed at the back of the end cap. The back has a longitudinally running spring strip. A housing type end cap is provided on at least one end of the back of the wiper strip, which secures the wiper strip in relation to the claw pairs in an axial direction against slipping outwards, in that with a holding arm it engages behind a claw pair or a stirrup leading away from it. The end cap has a housing basic body with two half shell parts pivotable against one another via a film hinge and which in a locking position engage around the back of the wiper strip.

In general, end caps installed on windscreen wipers are tested to determine whether they have been properly fitted at a separate work station by clamping them in some way, then trying to tear or pull them off the flexors. If the caps have been fitted properly, then they remain in place. If not, then they can be removed from the flexors without damaging them. The deficiency in these known solutions is that testing at a separate work station is both time-consuming and costly.

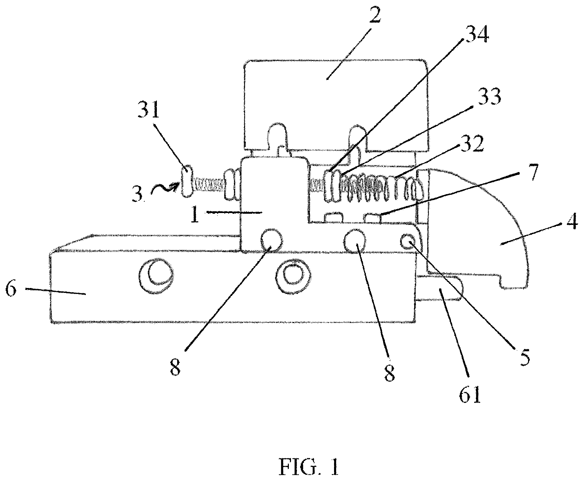

Document DE102008041261 discloses (figures 1-6) a windscreen wiper blade, in which a rubber element (20) is fitted onto flexors (88) by sliding the flexors from both sides into slots in the rubber element, then sliding the connector (100) up to the middle of the wiper blade on the flexors so that the flexors (88) and the rubber element (20) are held together by the connector (100), then the connector is affixed to the flexors and, if applicable, spoilers specified for the type of windscreen wiper in question are slid up to the connector in order to reduce air resistance, after which the end caps (48) are pushed toward the windscreen wiper blade from both sides, during the installation phase, via slide-in plate until the fitting tab on the bottom of each end cap slides into the receptacle on the end of the corresponding flexor, thus capping off the wiper blades and fixing them in place.

This invention has set as its objectives the elimination of the deficiencies inherent in known solutions and the creation of a process and test device with which the testing of end caps can be accomplished simply and economically, at the installation work station, during the installation process, using the installation equipment already available, without the need for additional manpower, and without incurring additional costs.

The solution according to this invention is based upon the recognition that if we establish whether the end caps of an arbitrary type of windscreen wiper blade have been adequately fitted and secured, during the installation process, using such equipment as is already available, by clamping the top of the end cap down and holding this position unchanged for testing using a tension-producing element - preferably a spring - to maintain pressure, then we attempt - during the return phase, at an appropriate pre-set force controlled by a force-regulating unit - to pull the installed caps out of position using a test assembly head and, among other things, a slide-in plate and securing bridge that is either connected or forms an integral part thereof, and if the end caps remain in place and affixed to the windscreen wiper blade undamaged, then they have been properly fit onto the windscreen wiper blades. In the event they have been improperly secured, then the end caps can be removed by the test device during the return phase and, once the end caps have been taken away and the windscreen wiper blade inspected, further testing may take place.

Thus, the present invention pertains to a process and test device for the inspection of windscreen wiper blade end caps.

In the process for assembling windscreen wiper blades according to this invention, a rubber element is fitted onto flexors by sliding the flexors from both sides into slots in the rubber element, then sliding the connector up to the middle of the wiper blade on the flexors so that the flexors and the rubber element are held together by the connector. After this, the connector is affixed to the flexors and, if applicable, spoilers specified for the type of windscreen wiper in question are slid up to the connector in order to reduce air resistance. This is followed by the end cap installation phase, in which the end caps are pushed toward the windscreen wiper blade from both sides via slide-in plate until the fitting tab on the bottom of each end cap slides into the receptacle on the end of the corresponding flexor, thus capping off the wiper blades and fixing them in place. This process tests whether the end caps have been adequately fitted and secured during the installation process, using a test device that includes, among other things, a securing bridge connected to or forming an integral unit with a slide-in plate, a force-regulating unit and a moving test assembly head with an axis of rotation, such that at the end of the installation phase, the test assembly head grips the top of the end caps and, during the return phase, attempt, at an appropriate force set using a force-regulating unit, to remove them from their position as secured to the windscreen wiper blades, and if the test assembly head jumps up, the end caps remain in place undamaged, then they have been adequately fitted and secured, whereas if they have been improperly secured, then the test assembly head will be able, in the return phase, to remove the end caps, and once the faulty end caps have been removed and the windscreen wiper blade inspected, further testing may take place.

A preferred embodiment of the process according to this invention is characterised in that the return force of the test assembly head is set experimentally as a function of end cap size and clamping strength.

A second preferred embodiment of the process according to this invention is characterised in that the return force of the test assembly head is set for the given end cap by a force-regulating unit, such that when an end cap has been properly fitted and secured, the test assembly head jumps over the end cap to return to its initial position, such that the end cap remains undamaged. If, however, the end cap has not been properly secured, the end cap mounted on the slide-in plate is gripped by the test assembly head of the test device, pulled off, and carried away.

The invention also pertains to a windscreen wiper blade end cap test device, having a slide-in plate with a guiding tongue used to slide end caps into place. The test device according to this invention is characterised in that it has a test unit that includes a securing bridge, force-regulating unit and a test assembly head with an axis of rotation, on which it moves, with either the securing bridge affixed to the slide-in plate by a securing element in a manner that permits an immovable joint, or the securing bridge and slide-in plate fashioned as a single structural unit. The test device also includes an accident-preventing cover, mounted onto the securing bridge with at least one cover-securing element.

In one preferred embodiment of the test device according to this invention, the force-regulating unit has a threaded force adjustment stem, a tension-producing element, and a set nut and locking nut that fit over the threaded force adjustment stem.

In another preferred embodiment of the test device according to this invention, the tension-producing element is a spring.

The solution according to this invention is described in greater detail via Figure 1, an axonometric drawing of one preferred embodiment of the test device according to this invention. The test device has a slide-in plate 6 with guiding tongue 61, used to slide end caps into place. The purpose of the guiding tongue 61 is to prevent the cap from being removed from the slide-in plate 6. The test device also has a test unit that includes a securing bridge 1, a force-regulating unit 3, and a test assembly head 4 with an axis of rotation , on which it moves up and down

. The securing bridge 1 is mounted onto the slide-in plate 6, preferably with two securing elements 7, in a manner that permits an immovable joint. The test device also has an accident-preventing cover 2, seen in the drawing prior to its installation onto the securing bridge. After the cover 2 has been placed onto the securing bridge 1, it is mounted there permanently, preferably using four cover securing elements 8. The force-regulating unit 3 has a threaded force adjustment stem 31, a tension-producing element 32, and a set nut 33 and locking nut 34 fitted over the threaded force adjustment stem 31. The fixing of the position on the threaded force adjustment stem 31 with respect to the securing bridge 1 that corresponds to the set force can be done using the set and locking nuts, as well, though this is not indicated on the drawing by separate numbering. In this preferred embodiment, the tension-producing element is a spring, as clearly shown in the diagram.

With reference to the foregoing, the test device according to this invention functions as follows:
First, the rubber windscreen wiper element is fitted onto the flexors by sliding the flexors from both sides into slots in the rubber element; then the connector is slid up to the middle of the wiper blade on the flexors. This is accomplished so that the flexors and the rubber element are held together by the connector. After this, the connector is affixed to the flexors in non-removable fashion, preferably by welding or press fitting, or, alternately, via some robust removable method, such as bolting or any other means. If applicable, as with modern windscreen wipers, spoilers specified for the type of windscreen wiper in question are slid onto the flexors up to the connector in order to reduce air resistance. (For some wiper types, the spoilers may be omitted, depending on what is specified in the order.) After this, the end caps are placed onto the windscreen wiper blade and, during the end cap installation phase, are pushed toward the windscreen wiper blade from both sides by slide-in plate 6, with the aid of the guiding tongue 61, until the fitting tab on the bottom of each end cap slides into the receptacle on the end of the corresponding flexor, thus capping off the wiper blades and fixing them in place. Since experience indicates that the end caps occasionally slip or fall off the windscreen wiper blade because the fitting tabs on the bottom of the caps fail to snap into the receptacles fashioned on the flexors for this purpose, either because the fitting tabs were faulty, or because the tabs were not slid into place properly, or because the flexors themselves were faulty, it is both expedient and desirable to establish whether the end cap installation process has been completed properly. It is for this purpose that the present invention has been devised, whereby the test is conducted during the installation process, such that it is attempted - at an appropriate pre-set force set using the force-regulating unit 3 of a test device that includes, among other things, a securing bridge 1 connected to or forming an integral part of a slide-in plate 6, a force-regulating unit 3, and a test assembly head 4 with an axis of rotation 5 that permits vertical movement - to remove the end caps during the return phase from their position as affixed to the windscreen wiper blades using the test assembly head 4 in which they are gripped. An important feature of this is the setting of the return force exerted by the test assembly head 4, which can be done experimentally, as a function of the size and clamping strength of the end caps. In doing so, the tension (spring force) of the movement of the test assembly head 4 is adjusted. This force must be strong enough that
   - It does not remove properly installed end caps from the windscreen wiper blade,
   - If the spring force is too large, then it may break the end cap or cause deformation,
   - If the spring force is too small, then the test assembly head may return to its initial position, such that it does not always remove and carry away end caps that have snapped into place improperly,
   - To ensure that the test process functions properly, a simulation is done using "bad" end caps (with snapping tabs partially or completely removed); also, end caps are checked for casting or other flaws.

The appropriate force is determined by experimentation, using the tension-producing element 32, by positioning the threaded force adjustment stem 31 of the force-regulating unit 3, and the setting held using the set nut 33 and locking nut 34.

In the event the end caps have been properly installed on the flexors, then the test assembly head 4 jumps past the end caps and returns to its initial position without damaging them. In this case, the windscreen wiper blade is sure to be in one piece and to remain so.

If, however, the end caps have not been properly secured, then during what is termed the return phase, the test assembly head 4 can pull the end caps. After the end caps have been removed and the windscreen wiper blade inspected, the process may begin again, so that a 100% inspection process is conducted.

The solution according to this invention employs the movement of the installation equipment itself to test end cap and flexor adequacy during the installation process; that is, it takes advantage of the installation and return phases to conduct testing at the very same work station.

In this process, the gripping action is very important, as the form and silicon-like material of the end caps make them hard to grip when they are on the installation machine. The test device according to this invention grips the end caps at the top, which permits larger clamps to be used and renders the process cheaper than if they were gripped at the bottom or sides.

The tension-producing element 32 - as was mentioned previously - is preferably a spring, as a spring-action grip ensures that the test process is not compromised following either the occasional faulty piece (end cap or flexor), or the properly fitted piece, as the test assembly head 4 is always returned to the desired test position. Without a spring or other tension-producing element (pressure-holding means), the test position might change, so that the grip is not guaranteed and secure testing rendered impossible.

In assembling the parts of the test device, various bolts or clamping means may be used (pop rivets, bolts, socket head screws, torx screws, etc.). What is important is that the threaded joints be robust and permit permanent joints to be formed, creating the appropriate return force and thus guaranteeing that the end caps are properly fitted onto and affixed to the flexors, and hence to the windscreen wiper blade.

The solution according to this invention therefore meets its set objectives and offers the following advantages:
- It allows testing to establish whether the end caps of any type of windscreen wiper blade have been properly fitted and secured at the work station where they are installed, during the installation process, using the installation equipment already available there,
- It is simple in construction,
- It does not involve increased human resources costs,
- It does not involve increased equipment costs,
- It reduces the hazard of accidents,
- It increases customer satisfaction, as it produces adequate wiping results on vehicle windscreens,
- It can be implemented economically.

### LIST OF DESIGNATIONS

- 1: securing bridge
- 2: cover
- 3: force-regulating unit
- 31: threaded force adjustment bolt
- 32: tension-producing element
- 33: set nut
- 34: locking nut
- 4: test assembly head
- 5: axis of rotation
- 6: slide-in plate
- 61: guiding tongue
- 7: securing element
- 8: cover-securing element

## Claims

1. A process for testing windscreen wiper blade end caps, in which a rubber element is fitted onto flexors by sliding the flexors from both sides into slots in the rubber element, then sliding a connector up to the middle of the wiper blade on the flexors so that the flexors and the rubber element are held together by the connector, then the connector is affixed to the flexors and, if applicable, spoilers specified for the type of windscreen wiper in question are slid up to the connector in order to reduce air resistance, after which end caps are, during the installation phase, pushed toward the windscreen wiper blade from both sides via a slide-in plate until a fitting tab on the bottom of each end cap slides into a receptacle on the end of the corresponding flexor, thus capping off the wiper blades and fixing them in place, ***characterised in that*** it tests, during the installation process, whether the end caps have been adequately fitted and secured, using a test device that includes, among other things, a securing bridge (1) connected to or forming an integral part of a slide-in plate (6), a force-regulating unit (3) and a test assembly head (4) with an axis of rotation (5), such that at the end of the installation phase, the test assembly head (4) grips the top of the end caps and, during what is termed the return phase, attempts, at an appropriate pre-set force controlled by the force-regulating unit (3), to remove the installed caps from their position as affixed to the windscreen wiper blades, such that if the assembly head (4) jumps up, the end caps remain in place undamaged, then they have been adequately fitted and secured, but if they have been improperly secured, then they can be removed by the test assembly head (4) during the return phase, and, once the end caps have been removed and the windscreen wiper blade inspected, further testing may take place.

2. The process according to Claim 1, ***characterised in that*** the return force of the test assembly head (4) is set experimentally as a function of end cap size and clamping strength.

3. The process according to Claim 1 or 2, ***characterised in that*** the return force of the test assembly head (4) is set for the given end cap by the force-regulating unit (3), such that when an end cap as been properly fitted and secured, the test assembly head (4), which moves on the axis of rotation (5), can return to its initial position by jumping over the end cap, leaving it undamaged and in its place, whereas if the end cap has not been properly secured, the end cap is pulled off by the test assembly head (4) of the test device and returned to its initial position.

4. A test device configured to carry out the process according to Claim 1, having a slide-in plate (6) with a guiding tongue (61) configured to slide windscreen wiper blade end caps into place, ***characterised in that*** it has a test unit that includes a securing bridge (1), force-regulating unit (3) and a moving test assembly head (4) having an axis of rotation (5) and configured to grip the top of the end caps and to attempt to remove the installed caps from their position, such that either the securing bridge (1) is configured to be affixed with a securing element (7) to the slide-in plate (6) in a manner that permits an immovable joint, or the securing bridge (1) and slide-in plate (6) are configured as a single structural unit, and **in that** it also includes an accident-preventing cover (2), mounted onto the securing bridge (1) with at least one cover-securing element (8).

5. The test device according to Claim 4, ***characterised in that*** the force-regulating unit (3) has a threaded force adjustment bolt (31), a tension-producing element (32), and a set nut (33) and locking nut (34) that fit over the threaded force adjustment bolt.

6. The test device according to Claim 4 or 5, ***characterised in that*** the tension-producing element (32) is a spring.

## Patentansprüche

1. Verfahren zum Prüfen von Scheibenwischerblattendabdeckungen, in welchem ein Gummielement auf Biegeelementen eingebaut wird durch Schieben der Biegeelemente von beiden Seiten in Schlitze in dem Gummielement, dann Schieben eines Verbindungsstücks bis zu der Mitte des Wischerblatts auf den Biegeelementen, so dass die Biegeelemente und das Gummielement durch das Verbindungsstück zusammengehalten werden, dann wird das Verbindungsstück an den Biegeelementen fixiert und, falls vorhanden, werden Spoiler, die für die Bauform des betreffenden Scheibenwischers spezifiziert sind, bis zu dem Verbindungsstück geschoben, um den Luftwiderstand zu reduzieren, danach werden Endabdeckungen, während der Installationsphase, von beiden Seiten über eine Einschubplatte in Richtung des Scheibenwischerblatts gedrückt bis eine Einbaulasche an der Unterseite jeder Endabdeckung in eine Aufnahme an dem Ende des entsprechenden Biegeelements gleitet, somit werden die Wischerblätter abgedeckt und an ihrem Ort fixiert, ***dadurch gekennzeichnet, dass*** es während des Installationsvorgangs prüft, ob die Endabdeckungen ausreichend eingebaut und befestigt worden sind, unter Verwendung einer Prüfvorrichtung, die unter anderem beinhaltet eine Befestigungsbrücke (1), die mit einer Einschubplatte (6) verbunden ist oder einen integralen Teil einer Einschubplatte (6) bildet, eine Kraftregelungseinheit (3) und einen Prüfanordnungskopf (4) mit einer Drehachse (5), so dass an dem Ende der Installationsphase der Prüfanordnungskopf (4) die Oberseite der Endabdeckungen greift und, während einer sogenannten Rückstellphase, versucht, bei einer geeigneten voreingestellten Kraft, die durch die Kraftregelungseinheit (3) gesteuert wird, die installierten Abdeckungen von ihren fixierten Positionen an den Scheibenwischerblättern zu entfernen, so dass, falls der Anordnungskopf (4) nach oben springt und die Endabdeckungen unbeschädigt an ihrem Ort verharren, diese ausreichend eingebaut und befestigt wurden, falls sie jedoch ungenügend befestigt wurden, können sie durch den Prüfanordnungskopf (4) während der Rückstellphase entfernt werden, und nachdem die Endabdeckungen entfernt worden sind und das Scheibenwischerblatt untersucht worden ist kann eine weitere Prüfung stattfinden.

2. Verfahren gemäß Anspruch 1, ***dadurch gekennzeichnet, dass*** die Rückstellkraft des Prüfanordnungskopfes (4) experimentell als eine Funktion der Endabdeckungsgröße und Klemmkraft eingestellt wird.

3. Verfahren gemäß Anspruch 1 oder 2, ***dadurch gekennzeichnet, dass*** die Rückstellkraft des Prüfanordnungskopfes (4) durch die Kraftregelungseinheit (3) für die gegebene Endabdeckung eingestellt wird, so dass, wenn eine Endabdeckung genügend eingebaut und befestigt worden ist, der Prüfanordnungskopf (4), welcher sich auf der Drehachse (5) bewegt, durch Springen über die Endabdeckung zu seiner Ausgangsposition zurückkehren kann, wobei diese unbeschädigt und an ihrem Ort verbleibt, wohingegen, falls die Endabdeckung nicht genügend befestigt wurde, die Endabdeckung durch den Prüfanordnungskopf (4) der Prüfvorrichtung abgezogen und zu ihrer Ausgangsposition zurückgebracht wird.

4. Prüfvorrichtung, die konfiguriert ist, das Verfahren gemäß Anspruch 1 auszuführen, aufweisend eine Einschubplatte (6) mit einer Führungszunge (61), die konfiguriert ist, Windschutzscheibenwischerblatt-Endabdeckungen an ihren Ort zu schieben, ***dadurch gekennzeichnet, dass*** sie eine Prüfeinheit aufweist, beinhaltend eine Befestigungsbrücke (1), eine Kraftregelungseinheit (3) und einen beweglichen Prüfanordnungskopf (4), der eine Drehachse (5) aufweist und konfiguriert ist, die Oberseite der Endabdeckungen zu greifen und zu versuchen die installierten Abdeckungen von ihrer Position zu entfernen, so dass entweder die Befestigungsbrücke (1) konfiguriert ist, mit einem Befestigungselement (7) an der Einschubplatte (6) fixiert zu werden, in einer Weise die eine unbewegliche Verbindung zulässt, oder die Befestigungsbrücke (1) und Einschubplatte (6) als einzelne Struktureinheit konfiguriert sind, und dadurch, dass sie auch eine Unfallschutzumhüllung (2) beinhaltet, die mit mindestens einem Umhüllungsbefestigungselement (8) auf der Befestigungsbrücke (1) montiert ist.

5. Prüfvorrichtung gemäß Anspruch 4, ***dadurch gekennzeichnet, dass*** die Kraftregelungseinheit (3) einen mit einem Gewinde versehenen Kraftanpassungsbolzen (31), ein spannungserzeugendes Element (32), und eine Einstellmutter (33) und eine Kontermutter (34) aufweist, die über den mit einem Gewinde versehenen Kraftanpassungsbolzen (31) passen.

6. Prüfvorrichtung gemäß Anspruch 4 oder 5, ***dadurch gekennzeichnet*, *dass*** das spannungserzeugende Element (32) eine Feder ist.

## Revendications

1. Procédé de test d'embouts d'essuie-glaces de pare-brise, dans lequel un élément en caoutchouc est placé sur des fléchisseurs où les fléchisseurs coulissent des deux côtés vers des fentes prévues dans l'élément en caoutchouc, puis où un connecteur coulisse jusqu'au milieu de l'essuie-glace sur les fléchisseurs, de sorte que ces derniers et l'élément en caoutchouc sont maintenus par le connecteur. Le connecteur est ensuite fixé sur les fléchisseurs, et, le cas échéant, des déflecteurs prévus pour ce type d'essuie-glaces de pare-brise coulissent jusqu'au connecteur afin de réduire la résistance à l'air, après quoi, pendant la phase d'installation, les embouts sont poussés vers l'essuie-glace du pare-brise depuis les deux côtés, à l'aide d'une plaque coulissante, jusqu'à ce qu'une patte de fixation située sur la partie inférieure de chaque embout coulisse à l'intérieur d'un réceptacle situé sur l'extrémité du fléchisseur correspondant, recouvrant ainsi les essuie-glaces et les fixant en place, **caractérisé en ce qu'**on vérifie, pendant le processus d'installation, si les embouts ont été correctement ajustés et fixés, à l'aide d'un dispositif de test qui comprend, notamment, un chevalet de fixation (1) relié à ou faisant partie intégrante d'une plaque coulissante (6), une unité de régulation de force (3) et une tête d'ensemble de test (4) avec un axe de rotation (5), de sorte que, à la fin de la phase d'installation, la tête d'ensemble de test (4) agrippe la partie supérieure des embouts et, lors de la phase dite de retour, tente, avec une force prédéfinie appropriée, contrôlée par l'unité de régulation de force (3), de retirer de leur position de fixation les embouts installés sur les essuie-glaces du pare-brise, de sorte que, si la tête d'ensemble (4) saute, les embouts restent en place et ne sont pas endommagés, ce qui signifie qu'ils ont été correctement ajustés et fixés, mais, dans le cas contraire, ils peuvent alors être retirés par la tête d'ensemble de test (4) pendant la phase de retour, et, dès que les embouts ont été retirés et l'essuie-glace de pare-brise inspecté, un autre test peut être effectué.

2. Procédé selon la revendication 1, **caractérisé en ce que** la force de retour de la tête d'ensemble de test (4) est définie de manière expérimentale en fonction de la taille de l'embout et de la force de serrage.

3. Procédé selon la revendication 1 ou 2, **caractérisé en ce que** la force de retour de la tête d'ensemble de test (4) est définie pour l'embout donné par l'unité de régulation de force (3), de sorte que, lorsqu'un embout a été correctement ajusté et fixé, la tête d'ensemble de test (4), qui se déplace sur l'axe de rotation (5), peut reprendre sa position initiale en sautant par-dessus l'embout, sans l'endommager et en le laissant à sa place, alors que, si l'embout n'a pas été correctement fixé, il sort, par la tête d'ensemble de test (4), du dispositif de test, et revient dans sa position initiale.

4. Dispositif de test configuré pour exécuter le procédé selon la revendication 1, ayant une plaque coulissante (6) avec une languette de guidage (61) configurée pour faire coulisser les embouts des essuie-glace de pare-brise et les mettre en place, **caractérisé en ce qu'**il possède une unité de test qui comprend un chevalet de fixation (1), une unité de régulation de force (3) et une tête d'ensemble de test mobile (4) ayant un axe de rotation (5), configurée pour agripper la partie supérieure des embouts, et pour tenter de retirer de leur emplacement les embouts installés, de sorte que le chevalet de fixation (1) est configuré pour être fixé sur la plaque coulissante (6) avec un élément de fixation (7) de façon à permettre une jonction immobile, ou que le chevalet de fixation (1) et la plaque coulissante (6) sont configurés comme une seule unité structurelle, et **en ce qu'**il comprend en outre un capot anti-accident (2), monté sur le chevalet de fixation (1) avec au moins un élément de fixation de capot (8).

5. Dispositif de test selon la revendication 4, **caractérisé en ce que** l'unité de régulation de force (3) possède un boulon d'ajustement de force fileté (31), un élément de tension (32), un écrou de réglage (33) et un écrou de blocage (34) qui se placent sur le boulon d'ajustement de force fileté.

6. Dispositif de test selon la revendication 4 ou 5, **caractérisé en ce que** l'élément de tension (32) est un ressort.
